# EUROPEAN PATENT APPLICATION

(11) **EP 1 918 661 A1**
(43) Date of publication of application: **07.05.2008**
(21) Application number: 06022603.2
(22) Date of filing: 30.10.2006
(51) Int. Cl.: F24J 2/04, E04C 2/54

(54) **Building element with integrated solar heating element**

(71) Applicant: STS solarni termo sistemi, Joze Felicijan s.o., 3214 Zrece (SI)
(72) Inventor: Joze, Felicijan, 3214 Zrece (SI)
(74) Representative: Marn, Jure

(57) **Abstract**

The subject of the invention is a building element comprising a poly-carbonate panel, which can be used either as roof or façade covering with integrated solar heating element for heating of water or air. Advantages of this element are not only in its versatility but also in manner of its production, and assembling.

## Description

### Field of the invention

Solar heating elements, roof coverings, façade coverings.

### Technical problem

Technical problem solved with present invention is reduction in weight and production cost as well as increase in strength and versatility of solar heating panels.

### State of the art

Solar panels have been developed, and used for quite some time. There are number of granted patents and patent applications which are close to subject at hand, to wit:

| Patent or patent application number | Inventor | Date |
|---|---|---|
| DE4303156A1 | HEINZ HAPKE | 4.2.1993 |
| AT384888B | STADLMAIERGUENTER | 25.1.1988 |
| US2006107993 | WILHELM KROKOSZINSKI HANS-JOAC (DE) | 25.5.2006 |
| NLI010996C | LIESHOUT LAURENS VAN (NL) | 13.7.2000 |
| DE10144148 | HAKE THOMAS (DE) | 3.4.2004 |
| ES2134720 | PEREZ RAMOS JOSE CARLOS (ES) | 10.1.1999 |
| DE4442578 | LEONHARDT HANS DR ING (DE); KAGARMEIER JOHANN DIPL ING (DE) | 5.6.1996 |
| DE4042208 | | 13.2.1992 |
| DE3230639 | GOETZBERGER ADOLF PROF DR (DE); SCHMID JUERGEN DR 1NG (DE); STAHL WILHELM DIPL PHYS (DE); WITTWER VOLKER DIPL PHYS DR (DE) | 23.2.1984 |
| GB2096306 | HELFRECHT MANFRED | 13.10.1982 |
| DE3100521 | BAERNREUTHER ALFONS DIPL ING (DE) | 8.12.1982 |
| EP0005110 | GOUJON JEAN | 31.10.1979 |
| DE2755555 | BEANTRAGT NICHTNENNUNG | 24.8.1978 |
| EP1469259 | THOLE FRANK (DE) | 30.10.2004 |
| WO03029730 | O'LEARY PATRICK | 14.4.2004 |
| WO2005008145 | SZYMOCHA KAZIMIERZ (CA) | 26.4.2006 |
| CN2757027Y | PAN GE (CN) | 8.2.2006 |
| SI21814 | PAJK ALJOSA (SI) | 31.12.2005 |
| US2003131842 | DOLL THEO (DE) | 17.7.2003 |
| GR1002426 | MALASIDIS THEODOROS | 6.9.1996 |
| JP7180312 | IDA HIROFUMI | 18.7.1995 |

### Description of the invention

Building element with integrated solar heating element, method for its assembly, and use solves the above referenced technical problem. The subject of the invention is therefore building element which can be used either as roof or facade covering with integrated solar heating element for heating of water or air. In this application these expressions are sometimes substituted with expression "solar panel". Advantages of this element are not only in its versatility but also in manner of its production, and assembling. The final goal is maximum reduction of building element cost, cost of other energy sources and simple integration with central air system (either heating or cooling), central heating system and system for heating of sanitary and pool water.

The development of this invention is a logical consequence of the following principles:
- development of the solar heating panels which can be integrated into the roof or façade of the building;
- reduction of manufacturing cost of the heating element and replacing costly input materials such as glass, copper, or aluminum with cheaper alternatives such as polymers;
- using solar heating elements for heating of both air and water; air solar heating elements have several advantages such as high efficiency, short reaction time, no need for anti-freeze etc.
- current absorbers are dark (dark blue, dark grey, black), these colors not favored by architects, so absorbers of other colors are of great benefit.
- there is a need for combined systems - heating of space, water, and using solar energy for cooling;
- there is a need for new media for energy accumulation, in addition to water also air within the heated/cooled space and mass of the building;
- development of new applications (currently the highest segment of solar heating elements are individual systems for beating of sanitary water while the most economically viable would be development of systems needing a lot of energy such as hotels, remote heating systems, pools, sports, commercial, industrial buildings, systems for heating for technology utilization in several industrial branches, drying facilities, distillation and desalinization water systems etc.)

The essence of this invention is in building element which can be assembled quickly, and which comprises integrated solar heating element, or panel, for heating of air and water.

The building element is comprised of polycarbonate panel elements. These elements are cellular, with cells arranged in one predominant direction, said direction also direction of flow of collant/heating fluid. Said elements are comprised of multi-wall polycarbonate panel with ultra-violet (UV) protection.

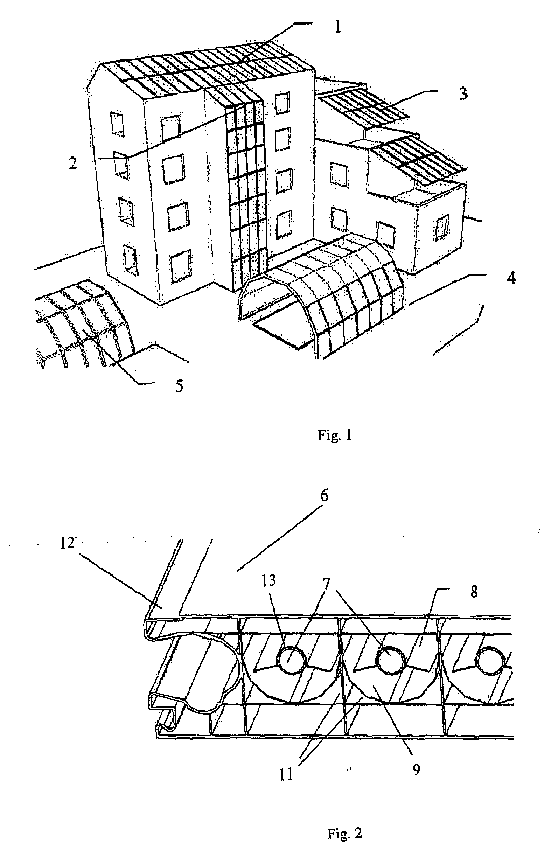

The advantages of poly-carbonate building elements are readily visible. They can be rather quickly assembled using snap-on or clip systems, said systems in principle known in state of the art, however, not in the area of solar heating elements. Said building elements can be used for most standard structural roof and façade elements, seen in Fig. 1 namely roof (1), façade (2), window shade element (3), retractable roof element over pools (4), roof element over parking systems (5).

Below, three preferred embodiments of building element with integrated solar heating elements are presented. All three are used preferably for roofing or façade application, and are comprised of poly-carbonate panel. This panel is comprised of plurality of cells which are in parallel. Depending on size of the panel one can choose number of cells. This panel is further preferably multilayered (multi-wall) as lamination achieves higher impact resistance and material strength, one envisions at least two layers although single layer applications are not excluded. This panel in principle works as a heat exchanger exchanging heat from thermal radiation from sun onto some heat conveying (transporting) fluid, preferably water. In order to achieve this function the panel should possess some degree of transparency. The heat transporting fluid can either be comprised within the tubes (e.g. in case of water, or anti-freeze), or cells themselves can act as transporting means (e.g. in case of air). In addition, within cells there can be thermal absorbers as thermal absorbing means (e.g. connected to tubes in case of water or anti-freeze, or simply put into the cells in case of air), and even linear concentrators as thermal radiation concentrating means, linear as they concentrate thermal radiation into essentially a line (as opposed to the point or essentially into point as in case of circular lenses). This line is essentially positioned onto a tube. Several tubes form tube registry (or tube bank). Some of the cells can be left empty to allow light to pass unhindered by obstacles such as tubes, absorbers, or linear concentrators.

Depending on the use the poly-carbonate panel displays function of the roof covering, and housing of the solar panel while the heat collecting element is comprised of various elements depending on planned use. For example, Fig. 2 shows building element for heating of sanitary water (6), said building element comprised of a copper tube registry (7), an absorber (8), and a linear concentrator (9), said copper tube registry (7) comprised of plurality of tubes (13) used to carry working fluid such as water or other fluid, said working fluid heated by solar energy absorbed by said absorber (8), in this embodiment shown as fins, said absorber (8) and said tube registry (7) heated by concentrated solar radiation, said radiation concentrated by linear concentrator (9). All of these elements are housed within cells (11) of poly-carbonate panel (12). While in principle some of these elements can be found in other solutions, none of these solutions show use of poly-carbonate panels, in which the concentrator (9) is inserted, this concentrator (9) having essentially mirror-like qualities, and is shaped essentially in form of a lens, so it reflects incoming sun rays, and concentrates these rays on both fin-shaped absorber (8) and tube registry (7) in form of a line, hence linear concentrator. Use of poly-carbonate panels ensures high enough strength, and as the polycarbonate panels are transparent, loss of energy is prevented.

In addition, some of channels can be intentionally left empty (i.e. without a tube (13) forming part of tube registry (7), or without absorber (8), or without concentrator (9), or without any combination thereof) resulting in providing day-light penetrating through said building element, hence providing both light and using solar radiation for heating of said fluid.

This type of building element provides for relatively high temperature (in principle around 50°C although this temperature does not limit scope of this invention and is inserted for comparative purposes only) heating fluid.

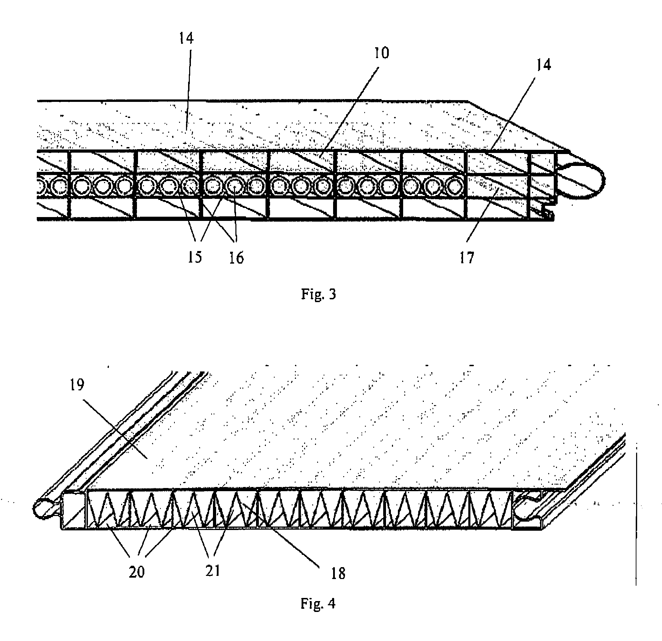

There is number of application requiring lower temperatures, for example for heating of sanitary water, or pool water. Fig. 3 shows such an embodiment, namely building element for heating of pool water (10) comprising housing of poly-carbonate (14), comprised of cells (17), and populated with tube registry (15) comprised of tubes (16). Said tube registry (15) is comprised of polyethylene, rubber, or similar substance with low enough cost and sufficient flexibility. The solar radiation penetrates the upper surface of poly-carbonate housing (14) and impinges upon tube registry (15) which heats up, and transfer energy onto a fluid flowing within said tube (16), preferably water. Similarly as before not all the cells (17) need to be populated, some of them can be left without the tubes (16) in order to allow light to pass the building element (10) in order to provide for illumination of space beneath said building element (10) or plurality thereof.

In both embodiments described above water serves as primary heat carrying fluid. The advantages over current state of the art where anti-freeze is used, is evident. Water is non-toxic, does not leave any residue (no fouling) if properly treated, has good thermal properties, and can be used without additional heat exchangers (in latter case some fouling is expected).

The third embodiment, Fig. 4, namely air heating building element (18) is comprised of polycarbonate housing (19), comprised of cellular structure, cells (20) comprising absorber (21), preferably of foil or other thin material, preferably of aluminum. This embodiment can be used for direct heating of air which passes alongside the absorber (21), said absorber being heated by impinging solar radiation. Similarly as before, cell or plurality thereof can be left empty enabling penetration of light.

All three embodiments can be buoyancy (natural convection) or forced convection driven, the latter using suitable pumps known in the state of the art.

Solar panels as described in preceding description have retained all the advantages of polycarbonate panels as known in state of the art, namely building elements, as follows:
- high resistance to atmospheric influence, UV rays and impacts is providing long life span. The risk associated with hail is minimum;
- low weight, high strength, and dimensional stability of poly-carbonate panels means high savings related to sub-frame assembly as virtually no supporting elements are needed, this being advantage over all solar panels found on the market; this also means that longspanned constructions can be erected, and further, that transport and assembly cost are low as well;
- solar panels can be bent in cold, easily cut and formed; this flexibility allows for design solutions previously unknown, and expand spectrum of usefulness;
- solar panels can be easily stored, formed, and assembled - handling is simple and safe; they can be adapted to desired size using the tools usually used in the building and assembly of buildings, they can also be built into most standard structural façade and/or roofing systems;
- due to its cellular structure, and due to its relatively small cell size as well as due to insulation properties of poly-carbonated the panels are both thermally and acoustically insulating. Five layer (wall) structure of said panels can, for example, reach the highest level of thermal insulation up to 1.5 W/m²K;
- the panels are fire resistant and exceed many similar materials, this being known from state of the art; in Slovenia, for example, poly-carbonate panels are classified in class 1 regarding flammability;
- the panels can be recycled;
- the panels are sanitary and hygienically proper as poly-carbonates are used in many fields, e.g. medicine;
- the panels can be obtained in any color desired, of course, clear panels having most desirable heating effects;
- poly-carbonate panels have been used in building for past 30 years and are therefore well known material to assembly crews.

In addition, solar panels as described in this application have additional surprising technical effects, as follows:
- excellent light penetration: the first layer (wall) allows more than 90% of light to pass unhindered;
- good resistance to thermal loading - permanently resistant to temperatures between - 100° C do + 120° C, and short term up to 140°C;
- good thermal insulating properties due to physics of the solution: the poly-carbonate panel (as described earlier) works as thermal insulator, and in addition, the energy is transported away by the heat carrying fluid (e.g. water) flowing through the tube registry, or by air flowing through the cells of the solar panel.

The advantages of the invention can be seen also in ease of the assembly on the building site, and ease of the manufacturing of said building panel.

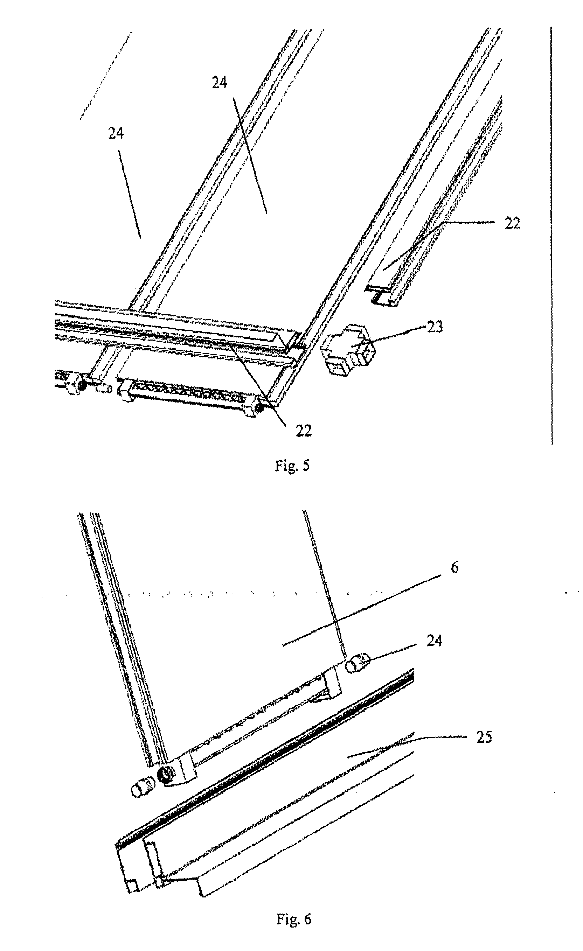

Fig. 5 shows typical construction of said building panel (solar panels). Said panels (24) regardless of three embodiments presented herein can be used in most standard façade or roofing systems, and can be assembled using supporting means (22) preferably aluminum beams and connecting means (23).

Fig. 6 shows assembly of the first preferred embodiment, namely panel for heating of water. The building elements (6) are interconnecting using connecting means (24) while the tubes connecting to the tube registry can be hidden within the supporting means (25).

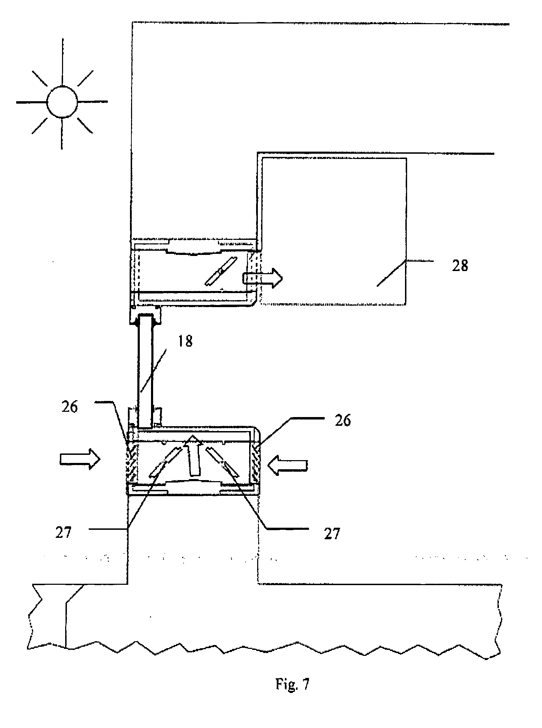

In addition, the air heating building elements (18) can be easily fitted in building construction as shown in Fig. 7 showing integration of building elements (18) in the façade. The air enters into air heating building element (18) via filter (26), while the regulating louvres (27) are used to regulate the direction and speed of air flow. Air then enters into duct (28) or plurality thereof for further use within the building.

Actual assembly of the building elements is rather simple, and is comprised of at least two steps from the following list, said list preferably but not necessary in assembly order:
- providing of cellular poly-carbonate panel of desired properties, thickness, structure, and color;
- providing of tubular registry;
- providing of absorber, preferably connected to tubes forming tubular registry;
- providing of linear concentrator;
- insertion of tubular registry into said poly-carbonate panel;
- insertion of absorber or plurality thereof into said poly-carbonate panel, if tubular registry is connected to assembly this step unnecessary;
- insertion of linear concentrator or plurality thereof into said poly-carbonate panel.

### As input materials are few, and simple, the whole process can be fully or partially automated

The previously described invention solves the following technical problems:
- simple construction, few assembly parts, and consequently lower production cost, ability to fully automate said production;
- simple integration into façade, roof, solar room, ... construction allows for aesthetically pleasing designs, and is further of high quality as a building element being good thermal and acoustic insulator, and further protecting facade against moisture;
- construction allows for building elements suitable for dimensions of the building, several elements are easily interconnected;
- lower weight and higher resistance against mechanical impacts (lighter and easier transport and assembly);
- lower cost of installation (tubes connecting to the tube registry as well as air ducts can be at least partially integrated into supporting means).

## Claims

1. Building element with integrated solar heating element, said building element used preferably for roofing or facade application **characterized in that** said building element comprised of poly-carbonate panel, said panel comprised of plurality of cells, said panel further comprised of at least one layer of poly-carbonate, preferably at least two, said panel at least partially transparent, said panel operating as heat exchanger transferring heat from solar radiation onto heat transporting fluid, said cells positioned lengthwise along position of direction of fluid movement, said cells further comprised of transport means for heat transporting fluid, thermal radiation absorbing means, and thermal radiation concentrating means.

2. Building element according to claim 1, **characterized in that** transport means and thermal radiation absorbing means are connected one to another.

3. Building element according to claim 1 or claim 2, **characterized in that** some cells are empty in order to allow light to pass essentially unhindered by obstacles.

4. Building element according to any preceding claim, **characterized in that** building element is preferably used for heating of sanitary water (6), said building element comprised of a copper tube registry (7), an absorber (8), and a linear concentrator (9), said copper tube registry (7) comprised of plurality of tubes (13) used to carry working fluid such as water or other fluid, said working fluid heated by solar energy absorbed by said absorber (8), preferably fins, said absorber (8) and said tube registry (7) heated by concentrated solar radiation, said radiation concentrated by linear concentrator (9); these elements housed within cells (11) of poly-carbonate panel (12); said element comprised further of a concentrator (9), this concentrator (9) having essentially miitor-like qualities, and shaped essentially in form of a longitudinal lens in order to reflect incoming sun rays, and to concentrate these rays on both fin-shaped absorber (8) and tube registry (7) essentially in line.

5. Building element according to any preceding claim, **characterized in that** building element (10) for heating of sanitary water, or pool water comprising housing of poly-carbonate (14), comprised of cells, and populated with tube registry (15) comprised of tubes (16), said tube registry (15) is comprised of polyethylene, rubber, or similar substance with low enough cost and sufficient flexibility, and further **characterized by** lack of linear concentrator.

6. Building element according to any preceding claim, **characterized in that** water is used as heat transporting fluid.

7. Building element according to any preceding claim, **characterized in that** air heating building element (18) is comprised of poly-carbonate housing (19), said housing comprised of cellular structure, cells (20) comprising absorber (21), preferably of foil or other thin material, preferably of aluminum, said air heating building element (18) further **characterized by** lack of tube registry, or absorber.

8. Method of assembly of building element with integrated solar heating element, said building element according to any of preceding claims, **characterized in that** apart from parts of the building element, and assembly parts no other particular supporting structure in necessary, and further, tubes for connecting to tube registry can be hidden within supporting structure.

9. Method of assembly of building element with integrated solar heating element, said building element according to any of preceding claims, **characterized in that** the assembly is performed in such a was that the air undergoing heating enters into air heating building element (18) via filter (26), while the regulating louvres (27) are used to regulate the direction and speed of air flow; after exit said air then enters into duct (28) or plurality thereof for further use within the building.

10. Method of assembly of building element with integrated solar heating element, said building element according to any of preceding claims, **characterized in that** the assembly is comprised of at least two steps from the following list, said list preferably but not necessary in assembly order:
- providing of cellular poly-carbonate panel of desired properties, thickness, structure, and color;
- providing of tubular registry;
- providing of absorber, preferably connected to tubes forming tubular registry;
- providing of linear concentrator; insertion of tubular registry into said poly-carbonate panel;
- insertion of absorber or plurality thereof into said poly-carbonate panel, if tubular registry is connected to assembly this step unnecessary;
- insertion of linear concentrator or plurality thereof into said poly-carbonate panel.
